# EUROPEAN PATENT APPLICATION

(11) **EP 1 829 940 A1**
(43) Date of publication of application: **05.09.2007**
(21) Application number: 05801260.0
(22) Date of filing: 09.11.2005
(51) Int. Cl.: C09D 11/02

(54) **PROCEDURE FOR THE PRODUCTION OF A SOLID PRINTING INK AND SOLID PRINTING INK THUS PRODUCED**

(30) Priority: 12.11.2004 ES 200402731
(71) Applicant: Chimigraf Iberica, S.L., 08191 Rubi (ES)
(72) Inventor: LA VALLE SANSONE, Ugo, Carcassi 6-8 E-08191 RUBI (ES)
(74) Representative: Manresa Val, Manuel
(86) International application number: PCT/IB2005/003351
(87) International publication number: WO 2006/051386

(57) **Abstract**

Procedure for the production of a solid printing ink and solid printing ink thus produced.

It comprises a first phase in which at least one pigment is mixed with a solid resin, such as to form a solid mass, that is **characterized in that** in addition, it includes the following phases: a second phase in which the resultant product of the first phase is milled, in a planetary rolls machine, until a homogenous paste is obtained with a predetermined colour strength, and a third phase in which, the resultant product of the second phase is broken, giving dry pieces or "Chips".

## Description

Procedure for the production of a solid printing ink and solid printing ink thus produced, that comprises a first phase in which at least one pigment is mixed with a solid resin, such as to form a solid mass, that is characterized in addition, to include the following phases: a second phase in which the resultant product of the first phase is milled, in a planetary rolls machine, until a homogenous paste is obtained with a predetermined colour strength, and a third phase in which, the resultant product of the second phase is brocken, giving dry pieces or "Chips".

### BACKGROUNDS OF THE INVENTION

From the end of the Forties, the top firms, specially Europeans, in the production of liquid inks for Flexography and Gravure printing process and the most important producers of pigments, began to develop a technique in the manufacture of solid pigmentary dispersions denominated "Chips" also called "Solid printing inks".

The multiple advantages of the solid printing inks were quickly stated, as soon as their use became popular in the sector of Liquid printing inks.

The greatest advantages of this product, that as follows we explain in detail, are still very appreciated; we remark the most relevants:
- High content of pigment (greater than 40%)
- High brightness and transparency of the final inks obtained from this product.
- Easiness of transport; as it is a solid ink 100%, its transport is at least 50% more economical than a traditional ink.
- Security in the transport; as it is a product 100% solid and therefore free of flammable solvents, the transport does not require any special safety measures.
- Absence of dust during the handling; (that it is the opposite that happens in the manufacture of a traditional liquid ink made from powdered pigments).

The manufacture of solid printing inks or "Chips" has traditionally used machinery that comes from rubber sector having followed the steps that are described as follows:
1) Blending phase
   By means of a double sigma blender it is produced the homogenous mixture, with or without heat contribution, of pigment, resin, in some cases of plasticizer, often with the aid of a solvent in order to reduce the viscosity.
2) Calendering or dispersing phase:
   Through a two roller machine, whose rolls turn at a different rim between them, it is proceed to the laminate of the paste obtained in the phase 1
3) Drying phase:
   The product obtained in the previous process, spread generally in sheets form, follows until drying process in order to eliminate the solvent that comes from blending process
4) Breakage Phase:
   The product, that comes from Phase 3, is broken in a rotating mill of blades where it is transformed into small irregular flakes called "Chips" or solid printing inks.

It is known the European Patent nº 0281720, of year 1987, in the name of the Swiss firm SICPA HOLDING, that refers to a method for preparing a flexographic or gravure printing ink in dry, powdered form. The method comprises comminuting a blend of all ink components, the solvents excluded, under oxygen free and temperature controlled conditions. The powder obtained is homogeneous, dust free, solid, dry and free-flowing and provides a ready-for-use printing ink on simply stirring with the normally used solvents.

The same applicant is owner of the Spanish Patent nº 200302463 (ES2232320), that relates to a method for the production of a solid printing ink and to the solid printing ink thus produced. The inventive method comprises: a first phase in which at least one pigment is mixed with at least one soy protein and at least one dispersing agent, such as to form a solid mass; a second phase in which a solvent is added to the solid mass from the first phase, in order to produce a homogeneous paste; a third phase in which the resulting product from the second phase is ground to produce a suitable colour yield; a fourth phase in which the homogeneous paste obtained in the third phase is dried, such that the solvent evaporates; and a fifth phase in which the resulting product from the fourth phase is triturated, thereby producing dry fragments or chips.

### BRIEF DESCRIPTION OF PATENT APPLICATION

The present patent application is a great advance in the sector of the manufacture of solid printing inks, since it proposes a new system of manufacture that breaks with the traditional system of production.

The main advantage of the present invention is the fact that works in a continuous system, that means, not related to four discontinuous phases previously detailed as Blending , Dispersing, Drying and Breakage.

Through this system it is possible to reach a greater regularity of the final product, a greater pigment concentration together with the possibility of carrying out practically instantaneous adjustments in the formulation during the process.

The process is also safer, specially in reference to dangerous products as Nitrocellulosic Chips, because they work in a closed atmosphere and without direct intervention of the operator.

It is an object of the present invention, a method for the production of a solid printing ink and solid printing ink thus produced, that comprises a first phase in which at least one pigment is mixed with a solid resin, such as to form a solid mass, that is characterized in addition, to include the following phases: a second phase in which the resultant product of the first phase is milled, in a planetary rolls machine, until a homogenous paste is obtained with a predetermined colour strength , and a third phase in which, the resultant product of the second phase is broken , giving dry pieces or "Chips".

It is another object of the present invention, a solid printing ink, in agreement with the previous method that is characterized in that it is composed by dry pieces or "Chips" with the following components: at least a pigment, and a solid resin.

### CONCRETE EMBODIMENT OF THE PATENT APPLICATION

In this concrete embodiment, the method to follow for the manufacture of a solid printing ink or "Chip" comprises the following phases:
A first phase in which at least one pigment is mixed with a solid resin, such as to form a solid mass.
A second phase in which the resultant product of the first phase is milled, in a planetary rolls machine, until a homogenous paste is obtained with a predetermined colour strength .
A third phase in which, the resultant product of the second phase is broken , giving dry pieces or "Chips".

It can be included an intermediate phase between the first and the second phase in which a solvent is added to the solid mass of the first phase being obtained a homogenous paste, as well as an intermediate phase between the second and the third phase in which the obtained homogenous paste obtained in the second phase is dried and cooled, being evaporated the solvent.

The advantage of this new method of production consists on that the three phases are carried out in a single "Planetary Rolls" machine constituted by an axis or central screw driven by an electrical motor of variable speed that gears on planetary rollers or screws of smaller diameter and with a special external mechanical finish that act simultaneously as transporters of the product and as effective dispersers of the pigment in the solid resin because of the high pair of friction that they generate to each other.

All this system works, in summary, like a great reducer -disperser.

The introduction of the different components of the formula takes place through automatic gravimetric proportioners controlled by a microprocessor located in the head of the machine.

Later, it is milled or it is dispersed in line, it means in another body of the same machine, the resultant product of the previous phase until it is obtained the necessary colour development of the pigment.

The final phase of obtaining the dry pieces or "Chips" takes place outside the planetary rolls machine through a line that comprises:
- Cooled of the material through water or nitrogen
- Transport of the material through a conveyor belt to the mill
- Cut of the material through a blade or disc mill.

In the case that it is necessary to store this final product, it means, the dry pieces or "Chips", these can be placed in containers or cardboard boxes, making easy their transport and conservation, since it is a dry product.

In a successive phase these small irregular pieces (Chips) are dissolved until it is obtained the suitable proportion of solids and the necessary viscosity for the application of the required liquid ink. The solvent used throughout this phase, can be water, a polar solvent, alcohol or a mixture alcohol with polar solvent.

The proportions of raw materials that are used in the first phase are the following ones:
a) supposing that it is used neither dispersing agent nor plasticizer:
   - the solid resin is in an overall proportion, between 15 and 60 %, and
   - the pigment is in an overall proportion, between 40 and a 85%.
b) supposing that it is used a dispersing agent:
   - the solid resin is in an overall proportion, between 14 and a 55%,
   - the pigment is in an overall proportion, between 40 and a 80%, and
   - the dispersing agent is in an overall proportion, between 0.3 and a 10%.
c) supposing that plasticizer is used:
   - the solid resin is in an overall proportion, between 14 and a 55%,
   - the pigment is in an overall proportion, between 40 and a 80%, and
   - the plasticizer is in an overall proportion, between 2 and a 18%
d) supposing that a dispersing agent and plasticizer are used:
   - the solid resin is in an overall proportion, between 14 and a 55%,
   - the pigment is in an overall proportion, between 40 and a 80%,
   - the plasticizer is in an overall proportion, between 2 and a 18%, and
   - the dispersing agent is in an overall proportion, between 0.3 and a 10%.

The use of the plasticizer comes directly related to the type of resin used, the intention is to do more flexible this last one.

Thus the use of a dispersing agent comes determined by the type of pigment used, if it is a pigment that does not disperse easily, it will be necessary to use a dispersing agent.

In order to obtain the suitable proportions of pigment and resin in the solid ink, the dry mass or "Chip" dissolves in a solvent or a solvent mixture. Depending on the type of chip or solid printing ink obtained, this solvent can be water, the universal solvent, a polar solvent, as ethyl acetate, or a mixture of solvents as they can be an alcohol and a polar solvent.

As exemplificative and non limitative, for the obtaining of a solid ink, the following proportions and components with respect to the dry mass will be as follows:

If it is in agreement with previous point a)
- Solid resin 20 %, (Polyamide)
- White pigment 80 %, (Titanium Dioxide).

If it is in agreement with point b)
- Solid resin 40%, (Polivinyl-butirral)
- Black pigment 54% (Carbon Black)
- Dispersing agent 6%

If it is in agreement with point c)
- Solid resin 14 % (Nitrocellulose)
- White pigment 79 % (Titanium Dioxide)
- Plasticizer 7 %

If it is in agreement with point d)
- Solid resin 36.2% (Nitrocellulose)
- Black pigment 46.5 % (Carbon Black)
- Dispersing agent 8 %
- Plasticizer 9.3 %

The amount of solvent that would be used to obtain the final liquid ink will depend on the tone of white to obtain: greater viscosity means less solvent concentration, and lower viscosity means more solvent concentration.

After the second phase, the paste obtained in the second phase is refined in the same planetary rolls machine to a temperature between 40 and 70 Celsius.

The present patent describes a new method for the production of a solid printing ink and solid printing ink thus produced. The examples mentioned here are not limitatives of the present invention, for that reason it will be able to have different applications and/or be adapted, all of them within the scope of the following claims.

## Claims

1. - Procedure for the production of a solid print printing ink or "Chips" that comprises:
- A first phase in which at least one pigment is mixed with a solid resin, such as to form a solid mass,
**characterized in that**, in addition, it includes the following phases:
- a second phase in which the resultant product of the first phase is milled, in a planetary rolls machine, until a homogenous paste is obtained with a predetermined colour strength , and
- a third phase in which, the resultant product of the second phase is broken , giving dry pieces or "Chips".

2. - Procedure in agreement with claim 1 **characterized in that** in addition it includes an intermediate phase between the first and the second phase in which a solvent is added to the solid mass of the first phase being obtained a homogenous paste.

3. - Procedure in agreement with claim 2 **characterized in that** in addition it includes an intermediate phase between the second and the third phase in which the obtained homogenous paste in the second phase is dried and cooled, being evaporated the solvent.

4. - Procedure, in agreement with claim 1 **characterized in that** in the first phase it is added at least a plasticizer to the solid resin.

5. - Procedure in agreement with claim 1 **characterized in that** in the first phase it is added a dispersing agent to the pigment.

6. - Procedure, in agreement with claim 1, **characterized in that** there is a fourth phase in which the dry pieces or "Chips" are dissolved in a solvent until it is obtained, in the predetermined proportion, a enough viscosity and concentration for the application of the required liquid ink.

7. - Procedure, in agreement with claim 1, **characterized in that** the dosification of the solid and liquid components, in the planetary rolls machine, is totally automatic.

8. - Procedure, in agreement with claim 1 or 3, **characterized in that** later to the second phase, the paste obtained in the second phase, is refined in the same planetary rolls machine to a temperature between 40 and 70 Celsius.

9. - Procedure, in agreement with claim 1 or 2 or 6, **characterized in that** the solvent is water.

10. - Procedure, in agreement with claim 1 either 2 or 6, **characterized in that** the solvent can be a polar solvent or a mixture of a polar solvent with an alcohol.

11. - Procedure, in agreement with claim 1, **characterized in that**:
- the solid resin is in an overall proportion, between 15 and a 60%, and
- the pigment is in an overall proportion, between 40 and a 85%.

12. - Procedure, in agreement with claim 5, **characterized in that**:
- the solid resin is in an overall proportion, between 14 and a 55%,
- the pigment is in an overall proportion, between 40 and a 80%, and
- the dispersing agent is in an overall proportion, between 0.3 and a 10%.

13. - Procedure, in agreement with claim 4 **characterized in that**:
- the solid resin is in an overall proportion, between 14 and a 55%,
- the pigment is in an overall proportion, between 40 and a 80%, and
- the plasticizer is in an overall proportion, between 2 and a 18%.

14. - Procedure in agreement with claim 4 and 5 **characterized in that**:
- the solid resin is in an overall proportion, between 14 and a 55%,
- the pigment is in an overall proportion, between 40 and a 80%,
- the plasticizer is in an overall proportion, between 2 and a 18% and,
- the dispersing agent is in an overall proportion, between 0.3 and a 10%.

15. - Solid printing ink, in agreement with the previous procedure **characterized in that** it is composed by dry pieces or "Chips" with the following components:
- at least a pigment, and
- a solid resin.

16. - Ink in agreement with claim 15 **characterized in that** it is added at least a plasticizer.

17. - Ink in agreement with claim 15 **characterized in that** it is added a dispersing agent.

18. - Ink, in agreement with claim 15, **characterized in that**:
- the solid resin is in an overall proportion, between 15 and a 60%, and
- the pigment is in an overall proportion, between 40 and a 85%.

19. - Ink, in agreement with claim 17, **characterized in that**:
- the solid resin is in an overall proportion, between 14 and a 55%,
- the pigment is in an overall proportion, between 40 and a 80%, and
- the dispersing agent is in an overall proportion, between 0.3 and a 10%.

20. - Ink, in agreement with claim 16 **characterized in that**:
- the solid resin is in an overall proportion, between 14 and a 55%,
- the pigment is in an overall proportion, between 40 and a 80%, and
- the plasticizer is in an overall proportion, between 2 and a 18%.

21. - Ink in agreement with claim 19 and 20 **characterized in that**:
- the solid resin is in an overall proportion, between 14 and a 55%,
- the pigment is in an overall proportion, between 40 and a 80%,
- the plasticizer is in an overall proportion, between 2 and a 18%, and
- the dispersing agent is in an overall proportion, between 0.3 and a 10%.

22. - Solid printing ink, in agreement with at least one of the claims from 15 to 21, **characterized in that** the referred dry pieces or "Chips" dissolve in a solvent or a solvent mixture, to obtain the liquid ink ready for its application.

23. - Solid printing ink, in agreement with claim 22, **characterized in that** the mentioned solvent is water.

24. - Solid printing ink, in agreement with claim 22 or 23, **characterized in that** the mentioned dry pieces or "Chips" can be dissolved with a polar solvent or a mixture of polar solve nt with an alcohol.
